# EUROPEAN PATENT APPLICATION

(11) **EP 3 072 564 A2**
(43) Date of publication of application: **28.09.2016**
(21) Application number: 16161857.4
(22) Date of filing: 23.03.2016
(51) Int. Cl.: A63F 13/25, G06F 3/048

(54) **INFORMATION SYSTEM**

(30) Priority: 25.03.2015 GB 201505049
(71) Applicant: PHM Associates Limited, London EC1V 2PT (GB)
(72) Inventor: HOOKHAM-MILLER, Peter, Pulloxhill, Bedfordshire MK45 5HH (GB)
(74) Representative: Ruuskanen, Juha-Pekka

(57) **Abstract**

An interactive information system for a vehicle and a method are disclosed. The system can comprise a processor configured to run a gaming engine, a display for presenting video generated by the gaming engine, and an input for receiving an indication of a feature of interest of the vehicle to a user. The processor is configured to select a video clip that is contextually relevant to the indicated feature of interest based on a decision matrix defining context points and relations between the context points and cause presentation of the selected video clip on the display. A server for distributing the matrices and a delivery management tool are is also disclosed.

## Description

This disclosure relates to information systems. Some more particular embodiments relate to a user guide system capable of presenting video and some others to providing information and assistance in relation to delivery and use of a product.

User guide systems can be used for example for assisting users to use new equipment, for example features of a new motor vehicle. The system can comprise a user interface provided by means of a display suitable for presenting graphical information such as still images and video. The display often comprises a touchscreen display. When a user wants to get information of a particular feature the user can press an appropriate button or icon on the touch screen display where after he can be presented an explanation of the feature of interest.

Some guidance systems enable presentation of video clips illustrating how the feature operates and/or shall be used. Such presentations can be particularly appreciated by users who are familiarising themselves with equipment, for example a new vehicle with unfamiliar, and often relatively sophisticated features.

The user interface of information systems for equipment such as for example cars may not be as responsive and intuitive as the users might wish. In case information is presented in static form such as a text, the explanations may not be informative enough and easy to read, especially if the user is driving or operating the vehicle otherwise at the same time. Videos including relevant information may be too long and have too much irrelevant information to be of meaningful assistance when trying to use a particular new feature of many available features. The wanted information may not be easily searchable and it may be difficult to find relevant information when it is needed, especially from a long video presentation. Further, the selection process opening a desired guidance may not be easy to understand or is otherwise difficult to use.

It is noted that the above discussed issues are not limited to any particular user guidance presentation system and use environment such as motor vehicles but may occur in any system where guidance in form of video is displayed to a user of complex equipment.

Embodiments of the invention aim to address one or several of the issues related to known user guidance systems adapted to present video guidance.

In accordance with an aspect there is provided a video guide system for a vehicle, comprising a processor configured to run a gaming engine, a display for presenting video for a user of the vehicle generated by the gaming engine, and an input for receiving an indication of a feature of interest to the user, wherein the processor is configured to select a video clip that is contextually relevant to the indicated feature of interest based on a decision matrix defining context points and relations there between and cause presentation of the selected video clip on the display.

In accordance with another aspect there is provided a server apparatus for an interactive video guide system for a vehicle, comprising at least one processor, and at least one memory including computer program code, wherein at least one memory and the computer program code are configured, with at least one processor, to maintain decision matrices defining context points and relations there between for use by terminal of the interactive video guide system, wherein the decision matrices enable selective display of videos generated by a gaming engine of a terminal based on indications of features of interest of the vehicle such that contextually relevant video is presented, and communicate the decision matrices to the terminals.

In accordance with yet another aspect method of presenting interactive video guidance for a vehicle is provided, the method comprising displaying video generated by a gaming engine on a display of a video guide system, receiving an indication of a feature of the vehicle of interest to a user, in response to the indication, selecting a video clip that is contextually relevant to the indicated feature of interest based on a decision matrix defining context points and relations there between, and displaying the selected video clip on the display.

In accordance with a more detailed aspect, the decision matrix is received from a server.

Configuration information regarding context points available for selection in the decision matrix may also be received.

The decision matrix and/or configuration information may be received by streaming transmission from a server. Data for the decision matrix can be received substantially real time from a server with the use of the feature.

A touchscreen user interface can be provided. Interactive hotspots can be presented on the touchscreen, the hotspots denoting features available for use by the user. In response to selecting a hotspot, selection is triggered based on the decision matrix for presentation of an associated video clip. A different type of presentation may be triggered based on at least one of the length of time the user presses the hotspot, location of the user, the number of times the feature has been indicated, and the source of the input.

The videos may be presented with three dimensional effect.

An interactive video guide display may be provided for a vehicle, wherein the input indicates use of a feature of the vehicle. The use may comprise one of operating hands-free phone apparatus, operating a control of the vehicle, operating of an entertainment system of the vehicle, and operating a maintenance feature of the vehicle. Input to the guide system can be provided by the hands-free phone apparatus, a control system of the vehicle, the entertainment system of the vehicle, and a maintenance control system of the vehicle.

A user activity may be determined based on the input. In response to determined user activity, a context point is determined in video, where after presentation of the video is moved to the context point. It is also possible to communicate information of the determined user activity to a server for use in providing assistance for the user. A voice communication channel may be opened between the user and a human operator where information of the determined user activity is utilised.

A video clip associated with a given feature may be presented only a predefined number of times in response to the user using the given feature.

A computer program comprising program code means adapted to perform any of the method or steps thereof as described herein is also provided.

A server apparatus configured to provide a delivery management tool may also be provided. Different stages of delivery process are managed by respective modules configured to interact with each other. The modules are also configured to interact with respective modules in user devices and with a database for storing information associated with given delivery processes.

Various exemplifying embodiments of the invention are illustrated by the attached drawing. Steps and elements explained herein may be reordered, omitted, and combined to form different embodiments and any step indicated as performed may be caused to be performed by another device or module. In the figures:
Figure 1 illustrates an example of a video guidance system;
Figure 2 illustrates context points in video data screen;
Figure 3 shows a flow chart in accordance with an embodiment;
Figure 4 shows a detailed example of a three dimensional view presented on the display;
Figure 5 shows architecture for a product delivery management system;
Figure 6 shows an example of a user guidance system; and
Figure 7 shows a data processing apparatus.

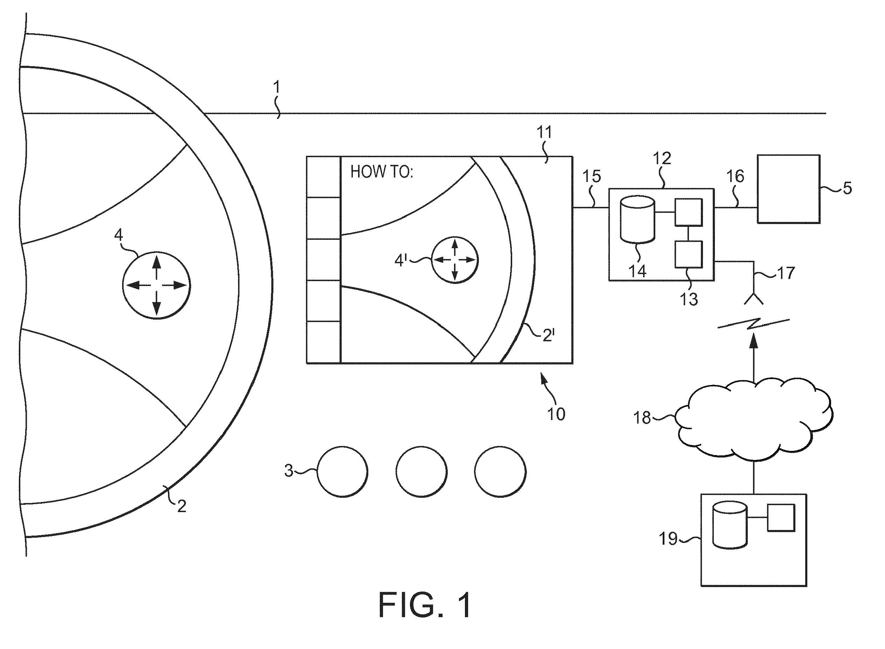

Figure 1 shows an example of environment where an information system 10 in accordance with certain embodiments can be provided. More particularly, Figure 1 shows a display 11 located in a dashboard 1 of a car. The display is located next to steering wheel 2 so that a user can conveniently view the graphical displays presented by the information system 10. The display can comprise a touch screen type user interface so that a user can select a function or feature by touching an appropriate icon on the display in per se known manner. The display can be provided as a part of a user terminal apparatus configured to embody the herein described principles.

The terminal apparatus is further shown to comprise a processor apparatus 12 comprising at least one data processor 13 and memory 14. The processor apparatus is connected by data connection 15 to the display 11 thereby enabling control of the graphical displays.

Further, a communication connection 17 is shown. Connection 17 can be used to connect the information system 10 to an external data network 18, for example internet protocol based network. Via this connection the control system can connect to appropriate data server apparatus 19. The server can comprise, for example, an application server of the manufacturer or seller of the particular equipment, a third party provider of relevant information services and so on.

The server apparatus 19 can provide a content management system. In a user guide content management system data for videos and respective interaction points, or context points, can be defined and linked together to form a decision matrix of available options. Use of such matrices is explained in more detail below. The content management subsystem can provide any appropriate information for the user of the information system. The information can be streamed to the information system 10 in substantially real-time. Alternative, or in addition, all or at least some of the information needed for generation of graphical displays is downloaded beforehand from the server 19 and stored in the local memory 13 of the information system.

Communication of data between the information system 10 and the data network 18 can be carried over one or more wireless connections. The wireless communications can be provided e.g. based on cellular technologies (e.g. 3^{rd}, 4^{th} and/or 5^{th} generation cellular systems with data communication capability), short range technologies enabling packet data communications such as those based on the Bluetooth™ protocol or Infrared, and/or a local area wireless network (LAN) such as via a WiFi base station.

In accordance with certain embodiments the processor apparatus can communicate data with other components of the vehicle. This can be provided via interface 16. Interface 16 provides an input for receiving information from and/or sending information to other components of the vehicle. In Figure 1 controller 5 of the vehicle is shown to denote such as component. In accordance with certain embodiments the input can be taken into account in operation of the information system 10, as will described in more detail below.

Figure 1 shows further controllers 3 and 4 of the vehicle. Controller 3 may be for example a rotatable switch for using the heating and/or air conditioning system of a vehicle. Controller 4 can be adapted for controlling the radio system, other entertainment system, cruise control system or the like of the vehicle without need to take hands off from the steering wheel 2. In accordance with an aspect an image of a controller the user wishes to get more information can be displayed on the touch screen and the user can select that component by clicking the image by his finger. As an example of this an image of a part of steering wheel 2 and of control 4 is displayed on the touch screen as denoted by references 2' and 4', respectively.

The processor apparatus 12 can generate the image by means of a gaming engine. Gaming engines are used by the gaming industry and are in general understood as a software framework designed for the creation and development of video games. Video game developers use them to create games for video game consoles, mobile devices and personal computers. The core functionality typically provided by a gaming engine includes a rendering engine for two dimensional (2D) or three dimensional (3D) graphics, a physics engine or collision detection, collision response, sound, scripting, animation, artificial intelligence, networking, streaming, memory management, threading, localization support, and a scene graph. Gaming engines are available from various developers, an example being Unity™ by Unity Technologies.

Processor apparatus 11 is adapted to run a multi-platform development gaming engine that is configured to provide flexibility and advance development features of the user interface. Preferably, the gaming engine is a 3D gaming engine allowing rapid development, testing and high resolution rendering of video presentations. The gaming engine can have hardware and a built-in resource manager that automatically adjusts rendering for different platforms such as web browsers, desktop installations, mobile devices such as mobile phones and tablets. By means of this the file sizes can be optimized to maximise performance. A 3D game engine can be fully configurable to allow for the creation of screen displays and 3D models tied to complex decision messages for intelligent, dynamic and contextual navigation of the information system based on user interaction. Use of the gaming engine for video rendering is advantageous because it limits use of file resources, system resources and overall bandwidth usage via real time rendering and real time streaming of new assets on demand.

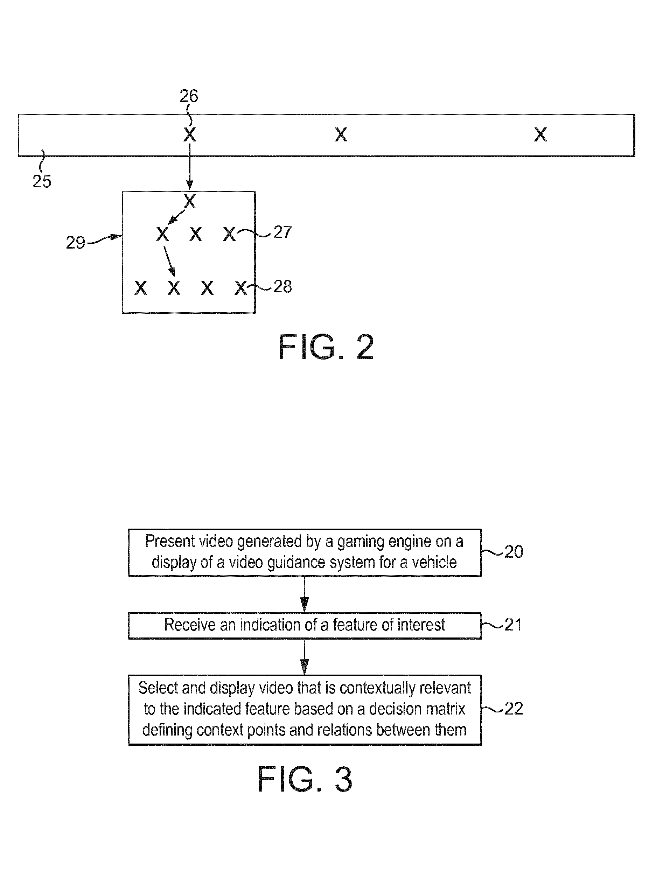

In accordance with an aspect of the invention the videos presented through the display can contain interaction points or context points to move the video to a desired point of presentation, for example to forward the video in such a way that the video presented is contextual to the user's interaction and other activity the user may be taking at a given moment. A schematic example of context points 26 in a video data stream 25 is shown in Figure 2. Each context point is associated with a particular user action, and an input associated with a particular action will result video presentation starting from that context point. The context points can be provided by means of a content management system provided by a server. In the content management system videos and their respective context points can be defined and linked together to form a decision matrix 29 of available options. Thus the context point 26 leads to a matrix of further context points 27, 28. When a video is selected by the user, or alternative in response to an input from another control device, the appropriate decision matrix 28 along with the configuration for what context points are available can be streamed via the data connection for display to the end user.

When a video currently displayed reaches a defined stop point 26 a set of context points 27, 28 can thus be made available for selection via on screen buttons. Once a user selects a context point they will continue down the decision matrix 29 till either they reach the logical end or choose to end the sequence prematurely. In Figure 2 this is illustrated by the arrows through layers 26, 27 and 28 of the matrix 29.

In accordance with an alternative the display and/or other components of the user terminal apparatus is not mounted e.g. in a dashboard of a vehicle but is provided in a separate, preferably handheld device. For example, the display and the data processing apparatus can be provided in a terminal such as a smart phone, tablet, laptop or desktop computer. User of such device can download an appropriate application from the server apparatus 19 to enable use of the interactive video guidance system.

Figure 3 illustrates an example of operation in accordance with the current invention. In step 20 video generated by a gaming engine, preferably by 3D gaming engine, is presented on a display of a video guidance system. The display can be located for example in a dashboard of a vehicle. The display may also be provided in association with any other equipment provided with an interactive video guide. The display may also be provided e.g. on a handheld device such as a tablet computer, a smartphone or a laptop computer.

An indication of a feature of interest to a user is received at 21. For example, an input indicative of user selection or an activity of a user can be received at. The input may indicate for example that a user is about to start a specific control operation. In response to the indication, a video clip can be selected at 22 that is contextually relevant to the indicated feature of interest based on a decision matrix defining context points and relations between the context points. The selected video clip can then be displayed on the display. As described above, the selection process can involve progressing from a context or selection point to another in a decision matrix.

At step 22 a video clip that is contextually relevant to said feature of interest can be presented substantially in real time in response to the input indicative of the activity of the user.

In accordance with an embodiment external control signal input to the information system trigger presentation of an appropriate video clip. The input signal may come for example from a control system of the vehicle, and be, for example, an indication that the user is controlling the temperature of a car, a radio of a car or taking another action in relation to a feature of a car.

In accordance with a specific example a user starts operating a hands-free communication device via e.g. a Bluetooth™ connection. When the user initiates using the hands-free apparatus pairing of the hand-free with a communication system of the vehicle may be needed. User can trigger relevant video presentation by selecting from the display screen an icon indicative this, e.g. an image visualising his or her phone. An input signal of initiation of the pairing can also be generated externally by the communication apparatus of the vehicle and provided for the control apparatus of the information system. In response to the selection or input a video clip explaining how to pair the hands-free device with the communication system of the vehicle is displayed on the display of the system.

Therefore a user wishing for example to pair his hands-free communication device with the communication system of the vehicle can get step-by-step guidance on the display. This can be provided without the need to view a lengthy video presentation. Instead, a user can select from the user interface provided by the display an appropriate looking image and that results either presentation of an appropriate video clip or a second tier selection of possible further option.

In accordance with certain embodiments, the guidance is provided automatically when user starts to use a desired functionality.

In accordance with a possibility the guidance is provided automatically whenever it is determined that the user tries to do something for the first time. It is also possible to present the video for example for a limited number of times of user attempts to use a feature of the vehicle that is determined as being novel to him. Different video can be presented depending the number of times the particular feature has been used.

The information system can provide a portal to individually deliver information and explanations for all relevant functions in a vehicle. For example, it is possible to show information about the entire exterior and/or interior of a car. Likewise, it is possible to display information on 'under the hood' technologies and systems of the car for the user. The user interface provided on display 11 can be interrogated by touching hotspots displayed on the display. In the example of figure 1 such a hotspot is exemplified by the image of control 4 by icon 4'. This can be used to dynamically generate live multi-media information to the user on the hotspot area touched.

The control apparatus 12 can be configured to store and deliver information required by the display application and dynamically populate the relevant fields on a display. The information is centrally stored and managed on a server and can be streamed to the information system. Thus the information can be instantly updated to new versions or alterations of the vehicle to make the information application up-to-date. Further, because information can be updated and downloaded via data connection interface 17 the application running in the apparatus can be easily localised for different languages, markets and models. This can be done also when e.g. a vehicle moves from a geographical area to another, e.g. to indicate authorised dealers and/or garages and other up-to-date local information that the user may wish to have.

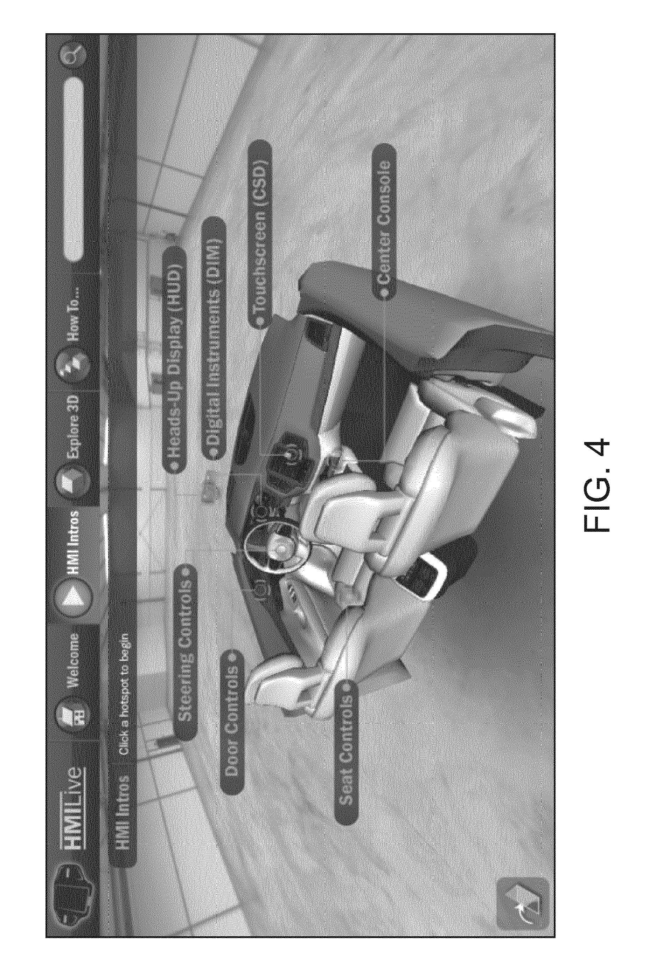

Figure 4 shows an example of a display on the user interface. A user may want to have a general overview of the areas within his proximity and get a better understanding of the functionality of various features of the vehicle. For example, a new user of a vehicle or a new potential buyer of a vehicle would like to get an instant general overview of the features of a vehicle it has just sat in. He can study the vehicle by pressing the various hotspots shown in the display to launch a video clip or multiple of video clips that explain operation and use of the different areas. Selection of a hotspot can lead to a matrix of further context points, thus drilling down to the specific feature the user wants to learn about. A user may want to know what a specific button or icon actually is for and how it operates. The user can interactively query for the specific button or part of the car he may not understand how to use by pressing an icon that looks exactly like the real live view of the specific button or other feature. For example, an icon 4' looking exactly like of the wheel button 4 on a steering wheel 2 of Figure 1 can be presented, and the user can touch or click the button on the 3D model to elicit helpful information interactively. The presentation can progress though the matrix as explained above so that the user is only displayed those video clips he/she feels are relevant.

The displays can be generated using data for text, graphics, sound and video drawn from content management system or streamed from the server 19 via data connection 17 of figure 1.

A single click on the icon may bring on a simple presentation and key features of the enquired button. Pressing and holding the icon down for a period of defined length of time can result in more detailed presentation of operation of the button.

A usability feature of the display is that it can accurately simulate the way buttons, icons and other controls are accessed in the actual car. The display makes no visual distinction between the virtual interfaces, for example touch screen icons, and physical interfaces such as physical buttons or other controls but they all look the same on the user interface.

Information can be presented as video clips and other multi-media presentation. The relevant video clips can be indexed and searched using a search interface provided on the screen. An enhanced user experience is provided by the dynamic presentation of video clips where these are automatically triggered in response a user taking an action, as explained above.

The graphics can be generated in real time through the gaming engine, and therefore less bandwidth is required than what would be required if using prerendered animations. Use of real time rendering also provides the advantage that the animations can be personalised to the user, for example based on input whether the user is using a specific phone brand and operating system and/or user preferences and/or other user specific information such as sex, age and so forth.

Also, because information displayed to the users is generated in real time and stored in the information system, this enables easy localization of text and graphical content so that multiple markets and language versions can be supported. It is possible to add or remove entire areas of functionality that are only available in a specific territory, for example to differentiate between countries where miles are used instead of metric measurements.

The information system can be used in various manners. In addition to a user of a new vehicle, for example, familiarising him or herself with the features of the vehicle, prospective buyers of a vehicle can download an application to their computing devices to become more accustomed with the car and its features prior to purchase thereof. Manufactures and dealers of vehicles can use the information system as a training tool for dealer staff. The information system can be loaded in the devices at motor shows, exhibitions and so on so that visitors and potential buyers can explore the vehicle further and take the application downloaded on their own personal devices with them for later study. Sales people in showrooms can use the information system on their mobile devices to explain the features of the vehicle to prospective buyers.

The gaming engine allows the application to be exported in multiple ways. For example, the application can be delivered as a HTML5 responsive web site or as a native application for operating system such as Android™, iOS™ and Windows™ operating systems. Offering a code once, deployed to many architecture makes testing and development of the system faster. Combined with the possibility of real time visual development tools it is possible to create reusable component libraries that work with limited or no testing across all platforms. Combined with a robust data infrastructure feeding content to the system it is possible to achieve a wide label platform that can be completely configured externally on a per client basis.

It is possible to take advantage of a rich open source library or features and supporting technologies to provide the user interface. The selection process can be tailored to be user or user group specific. The selection can take into account information e.g. on location of the user, the number of times a feature has been indicated, and the source of the input. This information can be embedded in the matrix in the way the context points are associated.

In accordance with an aspect a product delivery management system is provided for enabling integrated sales procedures and/or customer relationship management. The arrangement comprises a tool for integrating control of activities and data relating to transactions involving delivery of a complex product such as vehicle sales. The activities can include and the data relate e.g. to marketing, presentations and other public relations activities, test drives, activities in relation to the actual sales and physical delivery such as handover of a vehicle, financing the transaction, servicing the product such as a vehicle, staff training and guidance how to use the vehicle as well as providing other aftersales and customer care services and feedback and other reporting. It is possible to integrate management of every stage of sales and aftercare process into the management tool.

A control entity configured to provide the management tool can be located in a data server, for example server 19 of Figure 1. The server can provide a content management system for central control of all content and other data relating to product delivery from start to finish. A user device such as a tablet or laptop computer, a smartphone, a desktop computer or a vehicle mounted display device can communicate with the server via a data network, such as data network 18 of Figure 1. At least a part of the communication can occur via a wireless interface.

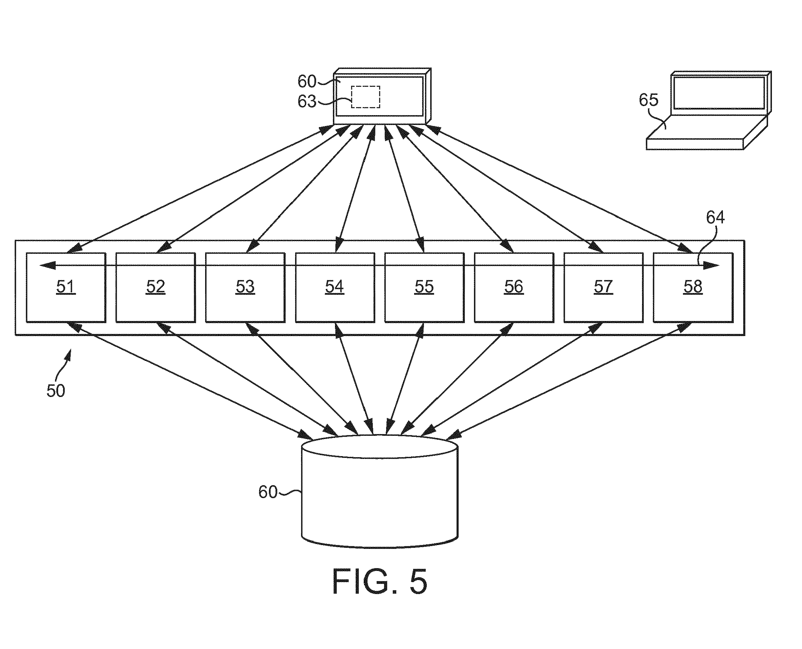

Figure 5 shows an example of various modules of a management tool 50 running on a server providing a back-end management unit. Figure 5 shows also examples of user terminal devices 62, 65. The arrangement can be such that the front and back ends of the management arrangement comprise corresponding functions and modules. The back-end management unit can interact with a front-end control unit and appropriate application(s) in a user device. User terminal devices can be provided with appropriate client applications providing at least a part of the front-end control functions. Differently configured client applications can run on terminal devices of the sales personnel and the potential and actual buyers of the products. Display devices integrated with the products, such as the display devices shown in Figures 1 and 4, can be adapted to run suitable application(s) to co-operate and communicate with the controlling server or servers.

It is noted that functions of the back-end tool may be distributed over a number of servers.

All data relating to the product delivery process can be gathered in a single database or datacentre, such as database 60 of Figure 5. The data can be stored in various manners as long as a central management server has access to it and the data is useable by the modules of the management tool 50.

The various stages of a product delivery procedure can be implemented as modules 51 to 58 of the management tool 50. The modules can interact with each other. The Figure 5 example illustrates a modular tool 50 in relation to a vehicle sales procedure as provided in a server. More particularly, eight different but integrated modules 51 - 58 are provided. Corresponding modules can be provided by the front-end application 63 provided at the user device 62. As indicated by the double-ended arrows, each module can communicate with the database 60 and the application 63 at the user device 62. Further, arrow 64 depict the capability of the modules to interact with each other.

Unlike in the current arrangements where a number of different, independent applications ('apps') can be provided for a user, the tool integrates the functionalities of the modules into one such that the user can be provided with a coherent visual use experience of the content.

The modules of Figure 5 can provide and/or control various functionalities and features in relation to the product delivery as follows.

Module 51 is arranged to handle the initial stage of the procedure. For example, activities such as the introduction, initial contact, meeting with a potential buyer either at a showroom or at a location preferred by the buyer, and so on. The sales person can be given various information and tools for the introduction and brand engagement. The module may also gather information for management purposes such as number of walk-ins and general comments and feedback by potential customers. Such information may be fed back by the server to a general management system, such as a mainframe computer system of a vehicle dealer or manufacturer.

Module 52 relates to handling of the initial product presentation and high-level qualification. For example, information of various models, their differences, engine types and sizes, new or used cars, options, special offers and campaigns, and so on can be generated and presented via the user devices. Information such as which models and product appear more appealing / possible "hot sellers" and so on can be fed back via the module to the server, and further to the general management system.

Module 53 can be provided to handle task relating to a more detailed consultative qualification. Functions of these modules can be provided by a single module. If two separated modules are provided for the qualification stage, module 53 can be adapted to handle the stage where the potential buyer is given quotation, finance options and so on. The sales person can be given access to more detailed demonstrations and technical detail, performance data, competitor comparisons, various options and possible product configurations and possible financial and other issues which could help in the negotiations. The final quotation can be fed back by the module to the backend server. The backend module may then pass the quotation data to a sales management system, the general management system or the like, as appropriate.

Module 54 handles tasks relating to product trials such as test drives and product trials. The potential buyer and the sales person can be given more detailed technical information via their respective user devices, information of the exact features of the vehicle or other product is being tested, and so on. The sales person can be give further sales argumentation, sales points and comparison data relating to other products on the market. Indication that a test drive has taken place and any feedback may be fed back to the general management system.

Module 55 relates to accessories, and is configured to give technical data, pricing information and so on. Information of any purchases and feedback can be fed back to the general management system.

Module 56 relates to data and function necessary at the stage of actual purchase of the product and taking in an order. Function such as purchase confirmation and providing and filling possible order forms and so on can be managed by this module. At this stage the buyer can be provided with his copies of the order confirmation, exact specification of the product, any special offers and benefits that relating to the product purchased and so on. The sales person can receive e.g. information of lead times, delivery options, any further options and financing deals and so on. The order is uploaded to the server and data transferred further to the general mainframe system, as the case may be.

The next module 57 relates to the actual physical delivery of the product ("handover"), and contain e.g. necessary forms and information such as user guides and other documentation delivered at that stage. Information about servicing and after sales services can also be delivered via the user terminal.

According to a possibility the product, such as a vehicle, also connects to the management tool at this stage. The tool can control or at least gather information of activities such as unlocking the doors, start of the engine, checking fuel and/or mileage, location of the vehicle, perform a general check and so forth. Remote unlocking and first start of the engine may be provided by the management tool when the user approaches a vehicle for the first time.

Module 58 relates to after sales activities such as service, client retention, advice and other aftersales services. Notification such as service reminders and bookings and so forth may be send to the user via this module. The module can further be configured to provide functionalities such as remote road side and other assistance (e.g. remote unlocking in case of lost keys / door control), parking assistance, location based services, incentives and other information.

Each of the modules can thus be configured to provide a variety of functionalities and features. The modules can communicate with each other, directly and/or via a database or a control unit. This enables use of the same base data for providing the functions and features. Thus e.g. an information already collected by one module for a user can be used by other modules and there is no need to collect that information again. The users can be identified based on appropriate identity information such as name, and address, a unique user ID, an identity card, fingerprint detection and so forth.

Each of the modules, and the management tool in general, can be used to control presentation of video clips as described above.

In accordance with an embodiment a user of a complex machine such as a vehicle can be provided with interactive personal assistance. The assistance can be provided e.g. by means of module 58 of Figure 5, or otherwise by an appropriate client application prat the user display device.

Individualised data associated with a given user can be stored in a database, for example in the server 19 or Figure 1 or database 60 of Figure 5. The data can be associated with the user based on appropriate identification that can have been assigned for the user and/or the device used to contact the tool when initial contact was made, or at any stage thereafter. When a user contacts the tool, the data is available for the relevant module or modules and/or human operator based on the identity information.

The modular structure can provide advantage e.g. in that the backend can be flexibly adapted to various products and even competing brands. Any changes are easy to make as this requires only module level modification without interfering with the interaction functions of the modules. The modules and client applications at the front end can be customised to particular brands, and to particular groups of user and even to individual users, while the backend can provide a general platform. The delivery management tool can be used to provide a common feel and visuals for what has so far been a fragmented collection of different apps, with information gaps between various stages of product delivery.

According to an embodiment information of features a user has just used, or has tried to use, is communicated to a server managing a relevant user account. The server may stream the user further information about the enquired feature. For example, the user may try to operate windscreen wipers, and after a couple of attempts information, for example a video clip, image data and/or audio data is streamed to the user device for guiding the user through the use of the windscreen wiper control.

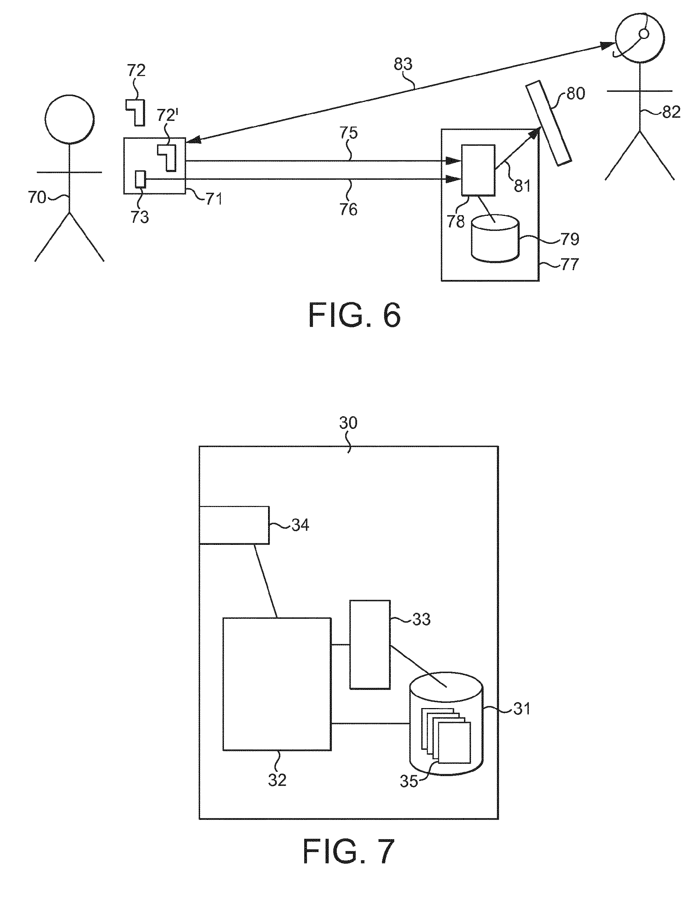

According to a possibility illustrated by Figure 6 a user 70 can select a 'help' icon 73 from a display device 71 or otherwise trigger a contact request to a helpdesk operated by a human operator 82 via his/hers display device. The user may have tried to use a feature 72 which in the example is also displayed on the screen as image 72'. Information of this has been communicated by signal 75 to the server 77. Control unit 78 of the server may cause storing this information to a database 79 and/or pass it to a display device 80 of the helpdesk operator 82.

The user 70 may decide to request for help from the helpdesk in using the feature 72. The request is passed by signal 76 to the server where control unit 78 is configured to identify the signal as a help request from the given user 70, and cause by signal 81 the request and information of the feature the user was trying to use to be displayed for the operator 82.

At this stage an audio channel 83 can be established between the operator 82 and the user 70. The audio channel can be over a data communication system used by the information system comprising the user display device 71 and the server 77 for audio communications, or e.g. via a public mobile network between the operator and to the user display device 71, or another communication device the user may have registered in the service. User 70 may also be responded by a message rather than or in addition to the voice call.

According to a possibility, when responding the request and during the call the operator can see in real-time the feature(s) the user has tried, is trying, and thus is likely to be concerned about. Because of this the user's enquiry can be responded swiftly and more accurately without having to go through a process of trying to clarify what the enquiry is about.

Figure 7 shows an example of control apparatus for a display screen device of a user capable of processing the above described actions e.g. in determining a triggering input and generation of video presentation in response thereto and communication with server apparatus and/or human operators. For this purpose the control apparatus comprises at least one memory 31, at least one data processing unit 32, 33 and an input/output interface 34. The database 31 is shown to comprise stored files 35. The files can correspond different section of the video and/or different sections of other representations. The input/output interface can provide interfaces 15, 16 and 17 of Figure 1 or for communication of information 75, 76 and 83 of Figure 6. Via the interface the control apparatus can thus be coupled e.g. to a display, other controllers and a data network. The connection to network can be wireless.

Similar data processing apparatus can be arranged to provide the functionalities of the content management system at a server. The server can be arranged to store individualised files and selection matrices for each user or a group of users, or files and matrices based on e.g. vehicle or other equipment make, type and/or model.

The control apparatus can be configured to execute an appropriate software code to provide the control functions. The control apparatus can also be interconnected with other control entities.

The various embodiments and their combinations or subdivisions may be implemented as methods, apparatuses, or computer program products. Methods for downloading computer program code for performing the same may also be provided. Computer program products may be stored on non-transitory computer-readable media, such as memory chips, or memory blocks implemented within the processor, magnetic media such as hard disk or floppy disks, and optical media such as for example DVD and the data variants thereof, CD, magnetic disk, or semiconductor memory. Method steps may be implemented using instructions operable to cause a computer to perform the method steps using a processor and a memory. The instructions may be stored on any computer-readable media, such as memory or non-volatile storage.

The required data processing apparatus may be provided by means of one or more data processors. The described functions at each end may be provided by separate processors or by an integrated processor. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples. The data processing may be distributed across several data processing modules. A data processor may be provided by means of, for example, at least one chip. The memory or memories may be of any type suitable to the local technical environment and may be implemented using any suitable data storage technology, such as semiconductor based memory devices, magnetic memory devices and systems, optical memory devices and systems, fixed memory and removable memory. In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto.

While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

In the above particular reference was made to user guide systems for users of equipment such as vehicles. The invention is not limited by this. The interactive user guide can be provided for any equipment where user may wish to view a relevant video clip in relation to one of many possible features. Non-limiting examples of such equipment include domestic and office appliances, automated check out desks, aeroplanes and so on.

It is also noted that the term video clip refers to any video presentation that relates to a particular feature. A video clip can for example a defined part of a longer video. A video clip may also comprise a complete video file.

The foregoing description provides by way of exemplary and non-limiting examples a full and informative description of exemplary embodiments of the invention. However, various modifications and adaptations may become apparent to those skilled in the relevant arts in view of the foregoing description, when read in conjunction with the accompanying drawings and the appended claims. All such and similar modifications of the teachings of this invention will still fall within the spirit and scope of this invention.

## Claims

1. An interactive video guide system for a vehicle, comprising
a processor configured to run a gaming engine,
a display for presenting video for a user of the vehicle generated by the gaming engine, and
an input for receiving an indication of a feature of interest to the user, wherein the processor is configured to select a video clip that is contextually relevant to the indicated feature of interest based on a decision matrix defining context points and relations between the context points and cause presentation of the selected video clip on the display.

2. A system according to claim 1, configured to receive at least one of the decision matrix from a server, configuration information regarding context points available for selection in the decision matrix.

3. A system according to claim 2, configured to receive the decision matrix and/or configuration information by streaming transmission from the server.

4. A system according to any preceding claim, configured to provide a touchscreen user interface on the display, the system being configured to present interactive hotspots on the touchscreen, wherein the hotspots denote features of the vehicle available for use by the user, and in response to user pressing a hotspot, trigger selection based on the decision matrix for presentation of an associated video clip.

5. A system according to claim 4, configured to trigger a different type of presentation based on at least one of the length of time the user presses the hotspot, location of the user, the number of times the feature has been indicated, and the source of the input.

6. A system according to any preceding claim, configured to present videos with three dimensional effect.

7. A system according to any preceding claim, wherein the use comprises one of operating hands-free phone apparatus, operating a control of the vehicle, operating of an entertainment system of the vehicle, and operating a maintenance feature of the vehicle, and wherein input is provided by the hands-free phone apparatus, a control system of the vehicle, the entertainment system of the vehicle, and a maintenance control system of the vehicle.

8. A system according to any preceding claim, configured to determine a user activity based on the input, in response to determined user activity, at least one of:
determine a context point in video and move presentation of the video to the context point,
send information of the determined user activity to a server for use in providing assistance for the user, and
open a voice communication channel between the user and a human operator utilising information of the determined user activity.

9. A system according to any preceding claim, wherein the processor is configured to display a video clip associated with a given feature only a predefined number of times when in response to the user using the given feature.

10. A server apparatus for an interactive video guide system for a vehicle, comprising at least one processor, and at least one memory including computer program code, wherein at least one memory and the computer program code are configured, with at least one processor, to maintain decision matrices defining context points and relations between the context points for use by interactive video guide system terminals, wherein the decision matrices enable selective display of videos generated by a gaming engine of a terminal based on indications of features of interest of the vehicle such that video that contextually relevant for the user of the terminal is presented, and communicate the decision matrices to the interactive video guide terminals.

11. A server apparatus according to claim 10, configured to provide a vehicle delivery management tool, wherein stages of the delivery process are managed by respective modules configured to interact with each other, with respective modules in a user device and with a database for storing information associated with a given delivery process.

12. A method of presenting interactive video guidance for a vehicle, comprising
displaying video generated by a gaming engine on a display of a video guide system,
receiving an indication of a feature of the vehicle of interest to a user,
in response to the indication, selecting a video clip that is contextually relevant to the indicated feature of interest based on a decision matrix defining context points and relations between the context points, and
displaying the selected video clip on the display.

13. A method according to claim 12, comprising receiving by streaming transmission from a server at least one of
the decision matrix in substantially real time with the use of the feature, and
configuration information regarding context points available for selection in the decision matrix.

14. A method according to claim 12 or 13, comprising
determining a user activity based on the indication,
in response to the determined user activity, at least one of
determining a context point in video and moving presentation of video to the context point,
communicating information of the determined user activity to a server for use in providing assistance for the user, and
causing opening of a voice communication channel between the user and a human operator where information of the determined user activity is utilised.

15. A product delivery management system comprising:
a delivery management tool configured for communication with user devices and for causing storing information associated with given users and products and features thereof associated with said given users,
at least one database for storing said information, and
a communication interface for data communication between said delivery management tool and said user devices,
wherein the delivery management tool comprises a plurality of delivery management modules corresponding to different stages of a delivery process of a product, each module being configured to manage its respective stage of the delivery process and to interact with other delivery management modules and the database.
